(19) Europäisches Patentamt
European Patent Office
Office européen des brevets

(11) **EP 4 446 850 A1**

(12) **EUROPEAN PATENT APPLICATION**

(43) Date of publication:
**16.10.2024 Bulletin 2024/42**

(21) Application number: **23210909.0**

(22) Date of filing: **20.11.2023**

(51) International Patent Classification (IPC):
**G06F 1/3228** (2019.01)    **G06N 3/063** (2023.01)
**G06N 3/10** (2006.01)    **G06F 1/324** (2019.01)
**G06F 1/3296** (2019.01)    **G06F 1/3234** (2019.01)

(52) Cooperative Patent Classification (CPC):
**G06F 1/324; G06F 1/3228; G06F 1/3243;
G06F 1/3296; G06N 3/063; G06N 3/10;**
G06F 2209/509; Y02D 10/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2023 US 202318133616**

(71) Applicant: **Intel Corporation
Santa Clara, CA 95054 (US)**

(72) Inventors:
• **PAUL, Somnath
Hillsboro, 97124 (US)**
• **KHELLAH, Muhammad M.
Tigard, 97224 (US)**
• **ZENG, Linda
Chandler, 85225 (US)**
• **ELMALAKI, Mohamed
Gilbert, 85298 (US)**

(74) Representative: **Maiwald GmbH
Engineering
Elisenhof
Elisenstrasse 3
80335 München (DE)**

(54) **POWER MANAGEMENT FOR EXECUTION OF MACHINE LEARNING WORKLOADS**

(57)    A system for autonomous and proactive power management for energy efficient execution of machine learning workloads may include an apparatus such as system-on-chip (SoC) comprising an accelerator configurable to load and execute a neural network and circuitry to receive a profile of the neural network. The profile may be received from a compiler and include information regarding a plurality of layers of the neural network. Responsive to the profile and the information regarding the plurality of layers, circuitry may adjust, using a local power management unit (PMU) included the apparatus, a power level to the accelerator while the accelerator executes the neural network. The power level adjustment may be based on whether the particular layer is a compute-intensive layer or a memory-intensive layer.

FIG. 1

**Description**

BACKGROUND

An AI or ML accelerator is a specialized class of hardware accelerator, device, or processing unit designed to accelerate AI and ML applications such as artificial neural networks (e.g., Convolutional Neural Networks or Deep Neural Networks) or machine vision. AI accelerators are often designed as a part of a heterogeneous processing unit such as a Visual or Versatile Processing Unit (VPU) in which several components are incorporated into a single chip, such as a system-on-chip (SoC), or the like, with each component on the SoC optimized or configured to perform a specific type of task. Energy efficiency of AI or ML accelerators is important for system performance and battery life.

BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 illustrates an example of a visual processing unit (VPU) for accelerating machine learning (ML) workloads.
FIG. 2 illustrates and example of compute and memory requirements across the layers of a typical neural or classification network.
FIG. 3 is a flowchart illustrating example operations for a compiler-based prediction of compute and memory intensive phases of a neural network.
FIG. 4 illustrates an example of a diagram of a method for dynamic power management of a neural network.
FIG. 5 is a block diagram of an example of a machine upon which any one or more of the techniques (e.g., methodologies) discussed herein can perform.

DETAILED DESCRIPTION

Energy efficiency, measured in performance per watt (perf/watt) is an important factor for the system performance and battery life of an AI or ML accelerator or acceleration engine used to execute a neural network (e.g., a neural network adapted for processing of image or video data). In the following examples, using a local power management unit (PMU) on the VPU that can dynamically change the voltage and/or the frequency of a signal to the VPU, while still operating within a fixed power budget from a central processing unit (CPU) level power-management unit can provide more autonomous power management and lower latency when executing the layers of the neural network. A workload-aware fine-grained power management in the VPU may allow for greater energy efficiency gains than what has been achieved through other power-management methods. The following also includes examples of a fine-grained (microsecond [$\mu$s] scale) Autonomous and Proactive Power Management (APPM) technique that may deliver higher energy efficiency and lower latency for a VPU executing a neural network.

ML workloads, particularly deep neural network (DNN) workloads have compute bound or compute intensive phases and memory bound or memory intensive phases. This means that some layers of a multi-layer DNN that process such workloads (e.g., data inputted into the neural network, such as an image) use more compute or processing power and some layers use more memory. Depending on what phase a particular layer involves, it is possible to share a given power budget between the compute units or digital processing units (DPU) and the memory + interconnect (CMX+Bus) partitions in the VPU architecture.

The APPM may deliver higher energy efficiency by leveraging the heterogeneity in workload phase behaviors in a given ML workload. Some of the technical improvements from the APPM technique as described herein may include:

i) ML workloads are generally deterministic, and hooks inserted by the compilation tool to create a command image for the underlying accelerator may exploit the workload phases for better energy efficiency, enabling power-aware compilation. Meaning, that as the ML algorithm or neural network is compiled, the power demands of a particular layer of the neural network may be determined. From this, the APPM may determine whether the particular layer of the neural network is compute-intensive or memory-intensive. In an example, the determination may be based on telemetry from on-die sensor circuitry and/or the architecture included on or in the VPU.

ii) The APPM may leverage fast voltage and clock ramp rates of the CPU. For example, a voltage regulator ramp rate of less than 1 volt/$\mu$s or a Fixed Loop Loss (FLL) of approximately 6 Gigahertz per microsecond [GHz/$\mu$s], which are already a part of the CPU design may be leveraged by the VPU thus requiring no new architecture or clock domains.

iii) While no new architecture partitions or clock domains are required, two separate voltage sub-domains may be required respectively for the compute units of the VPU (which already has a clock domain) and the memory/interconnect of the VPU (which also have clock domains). In an example, an APPM using adaptive frequency scaling (by dynamically adjusting the domain's phase-locked-loop (PLL) or using fast, low-overhead dynamic clock squashing circuits) may provide up to a 2.5% perf/watt benefit. In such an example, no new voltage islands may be required within the VPU.

iv) Compiler-based static prediction may be combined with dynamic telemetry obtained from performance counters and temperature sensors or voltage droop circuit sensors. This may allow for more effective proactive prediction of the power sharing across existing architecture partitions.

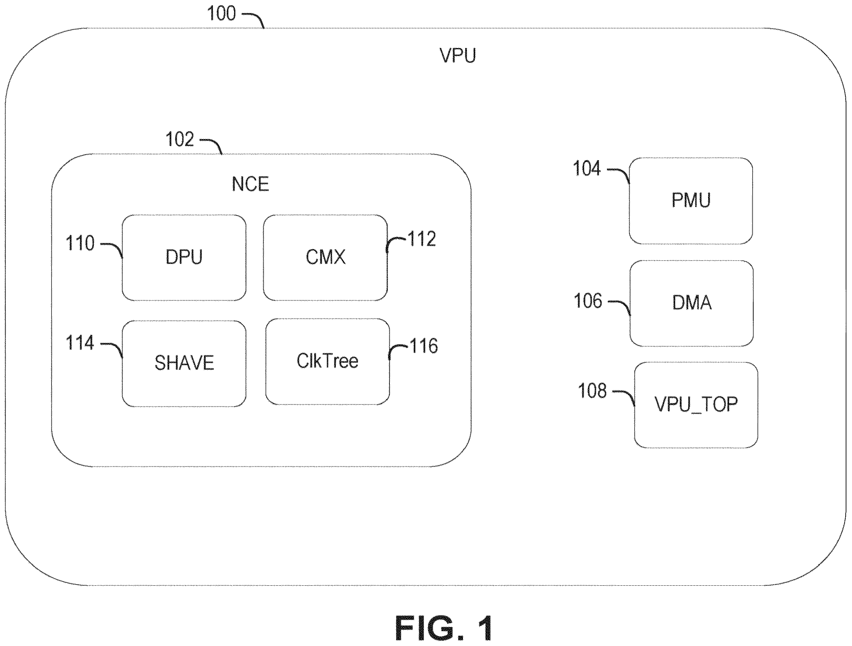

FIG. 1 illustrates an example of a visual processing unit integrated package (VPU) for accelerating machine learning (ML) workloads. As illustrated in FIG. 1, the VPU 100 may include a neural compute engine (NCE) 102, a local power management unit (PMU) 104, direct memory access (DMA) 106, and other VPU downstream and upstream components (VPU TOP) 108. The NCE 102 may include several components such as a data processing unit (DPU) 110 (which may also be called Multiply Accumulate Circuits (MACs), a fast programmable memory (CMX) 112, a Streaming Hybrid Architecture Vector Engine (SHAVE) 114, and a clock tree 116. The components illustrated in FIG. 1 are exemplary, and it is understood that the VPU 100 may include additional components not shown in FIG. 1 and can be implemented on a system-on-chip (SoC) or other similar device or apparatus that contains other types of processing, memory, communication components, or the like.

In an example, a compiler-based proactive prediction of compute and memory bound, or intensive, phases or layers of neural network may be employed by the VPU. In such an example, a compiler or performance simulator, which may be external to the VPU 100, may compile and analyze the neural network, layer-by-layer, to determine which layers are compute-intensive and which are memory-intensive. The determination of whether the phases or layers of the neural network are compute-intensive or memory-intensive may be based on whether the performance of a layer is limited, bound, constrained, or the like, by the compute bandwidth or the memory bandwidth of the VPU IP. For example, the determination of whether the layers or phases are compute-intensive or memory-intensive may be based on the power consumption of the VPU 100, the DPU 110, or the CMX 112 as the layers of the neural network are executed. In an example, the compute bandwidth may be limited by the number of compute units, the frequency of operation of the compute units, and the utilization of the compute units. The memory bandwidth may be limited by the bandwidth between the CMX 112 and the compute units and/or the bandwidth from memory external to the VPU 100.

Since architectural parameters such as the number and frequency of compute units and bus and memory bandwidth are defined during the design of the VPU, for any deep neural network or ML workload, it may be possible to fully estimate the execution latency and energy use or requirement of the layers of the neural network (e.g., each layer in the neural network, one or more respective layers of the neural network, or the like) and determine whether the performance of the layer (e.g. a particular layer) is limited by compute or memory performance. From the estimation, fractions of the total power budget available to the VPU 100 may be allocated to the compute and memory units. This fraction may be represented by a ratio of $F_{compute}$ and $F_{CMX}$ which may be passed to the hardware of the VPU 100 at runtime.

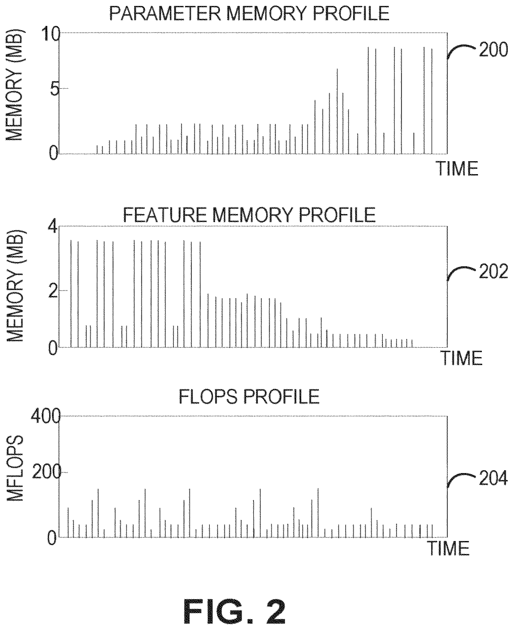

FIG. 2 illustrates an example of compute and memory requirements across the layers of a typical neural or classification network. Specifically, FIG. 2 illustrates example graphs of a parameter memory profile 200, a feature memory profile 202, and a Floating Point Operations Per Second (FLOPS) profile 204 for layers of a neural network as the layers are executed by the VPU IP 100. As illustrated in FIG. 2, the compute and memory requirements for executing a neural network are not constant, rather they vary over time. In the example illustrated in FIG. 2, the parameter memory is utilized less when executing the initial layers of the neural network (the layers executed earlier in time) and is utilized more when executing the subsequent layers (the layers executed later in time). Conversely, the feature memory is utilized more when executing the initial layers and utilized less when executing the subsequent layers. And, as shown in the FLOPS profile 204, the amount of compute bandwidth required to execute the layers may vary over the course of time. The graphs illustrate that the compute and memory intensive phases or layers may be orthogonal in time, meaning that they may not overlap. Thus, power may be effectively shared across the compute and memory partitions of the VPU architecture as demanded by the workload.

Whether a layer is compute-intensive or memory-intensive may be determined when the neural network is compiled in order to proactively predict whether the layer will be compute-intensive or memory-intensive during the actual execution of the neural network by the VPU IP 100. The variation in memory and compute demand illustrated in the parameter memory profile 200 graph, the feature memory profile 202 graph, and the FLOPS profile 204 graph may be addressed by dynamically adjusting a power level (e.g., a voltage and/or a frequency) to the accelerator as the accelerator executes the layers of the neural network.

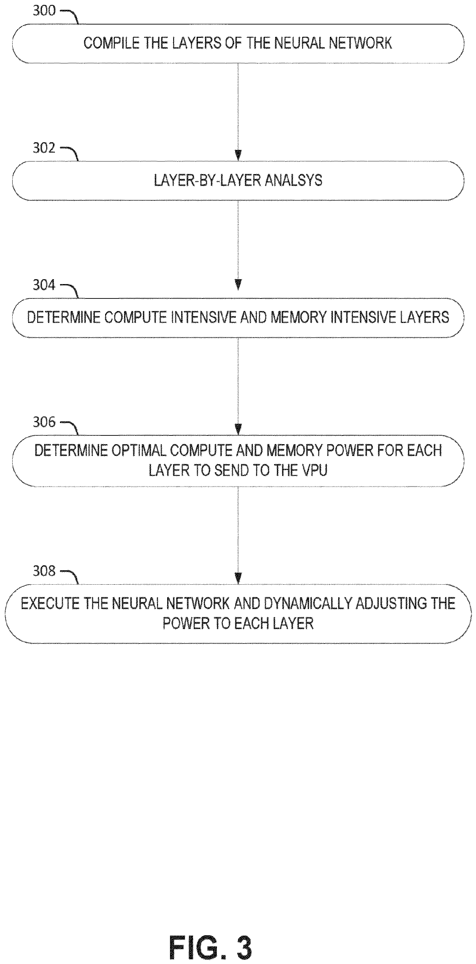

FIG. 3 is a flowchart illustrating example operations for a compiler-based prediction of compute and memory intensive phases of a neural network. At Operation 300, the layers of the neural network may be compiled by a compiler connected to, communicatively coupled to, or the like, the VPU of an ML accelerator. The compute and memory intensive phases of the neural network may be defined by whether the performance of the phase or layer is limited by, or primarily uses compute bandwidth or memory bandwidth. The compute bandwidth may depend on or be based on the number of compute units required to execute the phase, the frequency of operation of the compute units, and/or how the compute units are utilized. The memory bandwidth may be limited by, depend on, or be based on the bandwidth between the programmable memory (e.g., the CMX 112 discussed in FIG. 1) and the compute units and/or the bandwidth from memory external to the VPU.

Operation 302 may include performing a layer-by-layer analysis of the neural network using the simulator or compiler. The analysis can include generating, collecting, or determining per layer statistics or metrics, which may include an amount of hardware efficiency at each layer or one or more respective layers of the neural network, an amount of hardware utilization at each layer of the neural network, a number of compute cycles required to execute each layer of the neural network, a number of data cycles required to read or write weights or activations from a memory cache at each layer of the neural network, or the like. Once the metrics for each layer are determined, the compute cycles, data cycles, and cache cycles may be analyzed to identify compute-intensive layers and memory-intensive layers.

Operation 304 may include determining the compute and memory intensive layers of the neural network. The determination may be based at least in part on whether the number of compute cycles required to execute a particular layer meets a criterion. In an example, the criterion may be based on at least one of a maximum number of data cycles or cached cycles. For example, for each respective layer, when the number of compute cycles is $\geq$ max(data cycles, cache cycles) the particular layer may be deemed compute bound or intensive. Similarly, when the number of compute cycles is < max(data cycles, cache cycles), the particular layer may be designated as memory bound or intensive.

Operations 302 and 304 may be executed by a compiler that generates a VPU binary image when given a neural network description. The compiler may be provided with a hardware architecture description (e.g., an extensible markup language (XML)) which may provide the compiler with the architecture constraints and features of the VPU that will execute the neural network.

Operation 306 may include determining the optimal compute and memory power for each layer to send to the VPU. The determination may include a voltage and/or frequency to send to the DPU 110 and/or the CMX 112 discussed in FIG. 1, above. Returning to FIG. 3, once the compute and memory intensive layers have been identified in Operations 302 and 304, a determination may be made of the optimal power level or frequency for the DPU 110, which may lead to the lowest energy within a performance degradation threshold for execution of the neural network (e.g., five percent). The determination of the optimal power level may include calculating power and energy for each layer running at a baseline DPU frequency and aggregating the energy of all the layers of the neural network to determine a total energy of all the layers at the baseline frequency. This total energy may be considered a baseline total energy. Then, during a loop through all of the layers, for compute intensive layers, the DPU frequency may be reduced along the DPU's V-F curve, while calculating power and energy repeatedly until the performance drop is close to the performance degradation threshold. For memory intensive layers, the DPU frequency may be reduced repeatedly until the DPU is able to complete the compute cycles before data transfer is completed in cache or memory.

The energy of all layers may be summed together, and the reduction of the DPU frequency may be repeated until the performance drop equals to or is greater than the performance degradation threshold. The total energy at different DPU frequency points may be compared, and the DPU frequency with the lowest energy as $F_{compute}$ and the corresponding CMX frequency, $F_{CMX}$ may be selected. For compute intensive layers, $F_{CMX}$ may be calculated according to:

$$\alpha \text{ x } F_{compute} \qquad \textbf{Equation 1}$$

Where $\alpha$ is a pre-defined, fixed DPU-to-Bus (DPU-to-CMX or DPU-to-memory) frequency ratio in the VPU. For memory intensive layers, $F_{CMX}$ may remain the same such that the data transfer rate remains unaffected. The following equations show how the dynamic power, leakage power, duration, and energy per layer are determined.

$$P_{dyn} = HW_{eff} * HW_{util} * C_{dyn} * V^2 * F \qquad \textbf{Equation 2}$$

$$P_{lkg} = P_{ref(lkg)} * f(V,T) \qquad \textbf{Equation 3}$$

$$\text{Perf Cycles} = \max(\text{Compute Cycles, Data Cycles, Cache Cycles}) \; \textbf{Equation 4}$$

$$\text{Compute Intensive Layer: Duration} = \frac{Perf\ Cycles}{DPU\ Frequency} \qquad \textbf{Equation 5}$$

$$\text{Memory Intensive Layer: Duration} = \frac{Perf\ Cycles}{Bus\ Frequency} \qquad \textbf{Equation 6}$$

$$E_{node} = P_{node} * Duration \qquad \textbf{Equation 7}$$

$$E_{vpu} = E_{DPU} + E_{CMX} \qquad \textbf{Equation 8}$$

The notations for the variables in the equations listed above are detailed in Table 1, below:

TABLE 1

| Name | Description |
|---|---|
| F | Frequency |
| V | Voltage |
| $HW_{util}$ | Hardware Utilization |
| $HW_{eff}$ | Hardware Efficiency |
| $C_{dyn}$ | Transistor Switching Capacitance |
| T | Junction Temperature |
| $P_{dyn}$ | Dynamic Power |
| $P_{lkg}$ | Leakage Power |
| $P_{ref(lkg)}$ | Leakage Power in Typical Conditions (85 Degrees Celsius) |
| $P_{node}$ | Total Power of a Node (DPU or CMX Power) |
| $E_{node}$ | Energy of a Node (DPU or CMX Energy) |

Operation 308 may include executing the neural network and dynamically adjusting the power to each layer. In an example, for run-time dynamic power-sharing between the compute and memory units or layers, the local power-management unit on the VPU (e.g., PMU 104 in FIG. 1) may adjust the voltage and frequency ratio at the compute and memory layers $[V/F]_{compute}$ and $[V/F]_{CMX}$ at runtime based at least in part on the determination of $F_{compute}$ and $F_{CMX}$ derived during compilation of the neural network. The determination of $F_{compute}$ and $F_{CMX}$ may be passed to the local PMU at runtime through the use of a special power-management instruction from the compiler.

The local PMU may be responsible for translating the [V/F] ratio to actual frequencies depending on the power and thermal budget available to the VPU from a power management unit of a central processing unit (CPU) on which the VPU is included. In an example, detection of compute and memory intensive phases may be performed with runtime analysis of on-chip telemetry adding latency, however, such an approach requires a more complex local PMU. Whether the determination of $F_{compute}$ and $F_{CMX}$ come from the compiler or on-chip sources (offline sources or online sources), the local PMU may set the voltage and frequency, such as through local integrated voltage regulators (IVR) and/or through local phase or frequency locked loops (PLL or FLL).

The Operations discussed above are exemplary, and the compiler-based prediction may omit one or more of the listed Operations, may repeat Operations, may include other Operations, or may execute the Operations concurrently, substantially simultaneously, or in another order, as appropriate or desired.

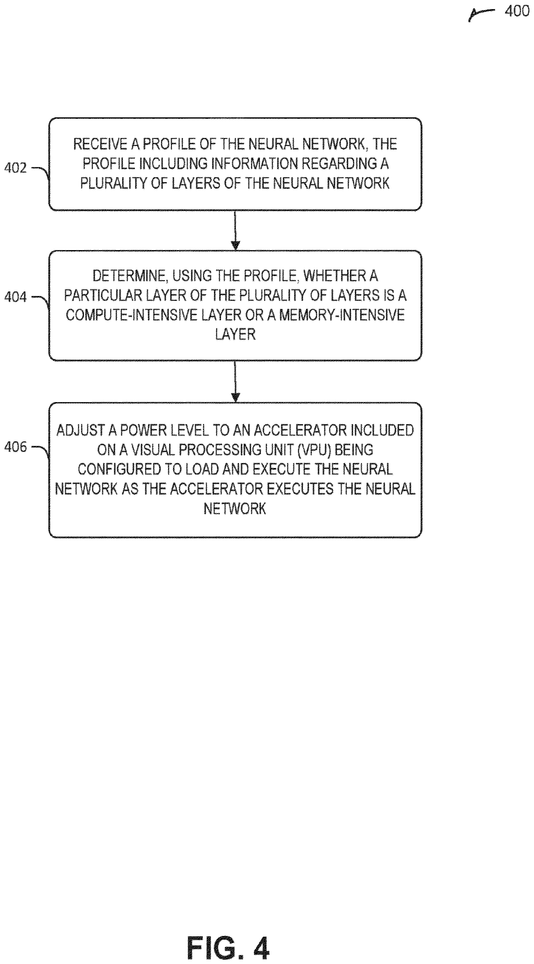

FIG. 4 illustrates an example of a diagram of a method 400 for dynamic power management of a neural network. The method 500 may include or comprise a number of Operations or Steps (402-406). These Operations are exemplary, and the executed method may omit one or more of the listed Operations, may repeat Operations, may include other Operations, or may execute the Operations concurrently, substantially simultaneously, or in another order, as appropriate or desired.

At Operation 402, the method may include receiving a profile of the neural network. In an example, the profile may be received from a compiler. The compiler may be included in, connected to, or coupled to an AI or ML accelerator, which in turn may be included on a VPU, SoC, or the like. The accelerator may be configured to load and execute the neural network. The profile may include information regarding a plurality of layers of the neural network. The profile may further include a layer-by-layer analysis of the neural network, the layer-by-layer analysis including one or more statistics or metrics for each layer of the neural network. The one or more metrics may include one or more of an amount of hardware efficiency at each layer of the neural network, an amount of hardware utilization at each layer of the neural network, a number of compute cycles required to execute each layer of the neural network, or a number of data cycles required to read or write weights or activations from a memory cache at each layer of the neural network.

At Operation 404, the method may include determining, using the profile, whether a particular layer of the plurality of layers is a compute-intensive or compute-bound layer or a memory-intensive or a memory-bound layer. For example, whether the particular layer uses or requires more compute or processing resources or uses or requires more memory resources during execution of the particular layer. For example, an amount of compute bandwidth and/or an amount of memory bandwidth may be determined at the time the neural network is compiled. In an example, determining whether a particular layer of the plurality of layers is compute-intensive or memory-intensive includes determining whether the number of compute cycles required to execute the particular layer meets a criterion. The criterion may be based on at least one of a maximum number of data cycles or cached cycles.

At Operation 406, the method may include, responsive to the profile and the information, adjusting a power level to the accelerator. Adjusting the power level to the accelerator may include adjusting at least one of a voltage level or a frequency of a signal to the accelerator while the accelerator executes the particular layer of the neural network. The adjustment of the power level may be based on whether the particular layer is a compute-intensive layer, or a memory-intensive layer as determined at Operation 404. The power level may be adjusted by a local power management unit included on the VPU.

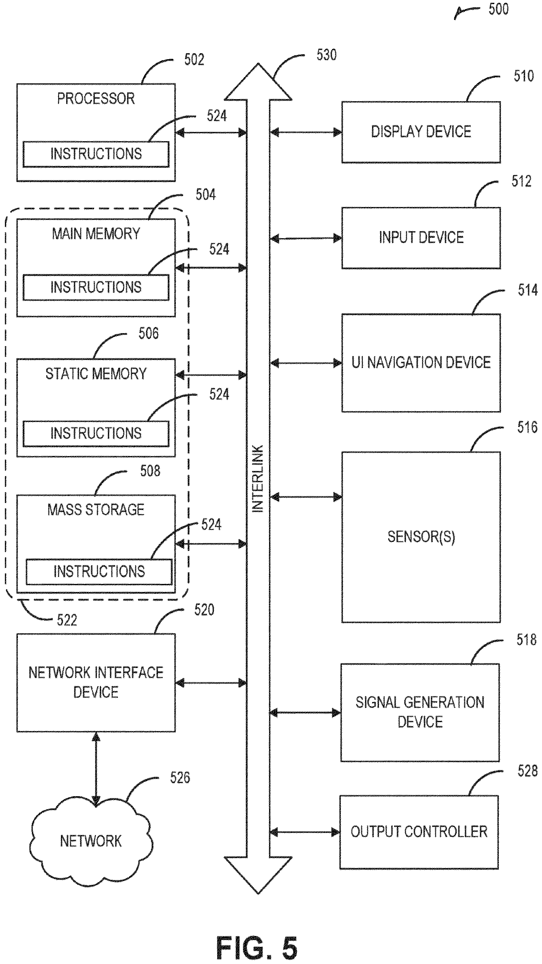

FIG. 5 is a block diagram of an example of a machine 500 upon which any one or more of the techniques (e.g., methodologies) discussed herein can perform. The machine 500 can operate as a standalone device or can be connected (e.g., networked) to other machines. For example, the machine 500 can be coupled or include the VPU 100 and the components of the VPU 100 discussed above. In a networked deployment, the machine 500 can operate in the capacity of a server machine, a client machine, or both in server-client network environments. In an example, the machine 500 can act as a peer machine in peer-to-peer (P2P) (or other distributed) network environment. The machine 500 can be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, can include, or can operate by, logic or a number of components, or mechanisms. Circuit sets are a collection of circuits implemented in tangible entities that include hardware (e.g., simple circuits, gates, logic, etc.). Circuit set membership can be flexible over time and underlying hardware variability. Circuit sets include members that can, alone or in combination, perform specified operations when operating. In an example, hardware of the circuit set can be immutably designed to carry out a specific operation (e.g., hardwired). In an example, the hardware of the circuit set can include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components can be used in more than one member of more than one circuit set. For example, under operation, execution units can be used in a first circuit of a first circuit set at one point in time and reused by a second circuit in the first circuit set, or by a third circuit in a second circuit set at a different time.

Machine 500 (e.g., computer system) can include a hardware processor 502 (e.g., a central processing unit (CPU), a graphics processing unit (GPU), a hardware processor core, field programmable gate array (FPGA), or any combination thereof), a main memory 504 and a static memory 506, some or all of which can communicate with each other via an interlink (e.g., bus) 530. The machine 500 can further include a display unit 510, an alphanumeric input device 512 (e.g., a keyboard), and a user interface (UI) navigation device 514 (e.g., a mouse). In an example, the display unit 510, input device 512 and UI navigation device 514 can be a touch screen display. The machine 500 can additionally include a storage device 508 (e.g., drive unit), a signal generation device 518 (e.g., a speaker), a network interface device 520, and one or more sensors 516, such as a global positioning system (GPS) sensor, compass, accelerometer, or other sensor. The machine 500 can include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 508 can include a machine readable medium 522 on which is stored one or more sets of data structures or instructions 524 (e.g., software) embodying or used by any one or more of the techniques or functions described herein. The instructions 524 can also reside, completely or at least partially, within the main memory 504, within static memory 506, or within the hardware processor 502 during execution thereof by the machine 500. In an example, one or any combination of the hardware processor 502, the main memory 504, the static memory 506, or the storage device 508 can constitute machine readable media.

While the machine readable medium 522 is illustrated as a single medium, the term "machine readable medium" can include a single medium or multiple media (e.g., a centralized or distributed database, and/or associated caches and servers) configured to store the one or more instructions 524.

The term "machine readable medium" can include any non-transitory medium that is capable of storing, encoding, or carrying instructions for execution by the machine 500 and that cause the machine 500 to perform any one or more of the techniques of the present disclosure, or that is capable of storing, encoding, or carrying data structures used by or associated with such instructions. Non-limiting machine readable medium examples can include solid-state memories, and optical and magnetic media. In an example, a massed machine readable medium comprises a machine readable medium with a plurality of particles having invariant (e.g., rest) mass. Accordingly, massed machine-readable media are not transitory propagating signals. Specific examples of massed machine readable media can include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 524 can further be transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards), IEEE 802.15.4 family of standards, peer-to-peer (P2P) networks, among others. In an example, the network interface device 520 can include one or more physical jacks (e.g., Ethernet, coaxial, or phone jacks) or one or more antennas to connect to the communications network 526. In an example, the network interface device 520 can include a plurality of antennas to wirelessly communicate using at least one of single-input multiple-output (SIMO), multiple-input multiple-output (MIMO), or multiple-input single-output (MISO) techniques. The term "transmission medium" shall be taken to include any tangible medium that is capable of storing, encoding, or carrying instructions for execution by the machine 500, and includes digital or analog communications signals or other tangible medium to facilitate communication of such software.

ADDITIONAL NOTES & EXAMPLES

Example 1 is an apparatus comprising: an accelerator, wherein the accelerator is configurable to load and execute a neural network; and circuitry configured to: receive a profile of the neural network, the profile including information regarding a plurality of layers of the neural network; and responsive to the profile and the information regarding the plurality of layers, adjust a power level to the accelerator while the accelerator executes the neural network.

In Example 2, the subject matter of Example 1 optionally includes wherein the circuitry is further configured to: determine, using the profile, whether a particular layer of the plurality of layers is a compute-intensive layer or a memory-intensive layer.

In Example 3, the subject matter of Example 2 optionally includes a local power management unit (PMU) configured to adjust the power level to the accelerator, and wherein the circuitry causes the PMU to adjust the power level.

In Example 4, the subject matter of Example 3 optionally includes wherein the accelerator and the circuitry are implemented by a visual processing unit (VPU), wherein the PMU is located on the VPU, and wherein the neural network is adapted for processing of image or video data.

In Example 5, the subject matter of Example 4 optionally includes wherein to adjust the power level to the accelerator includes adjusting at least one of a voltage level or a frequency of a signal to the accelerator while the accelerator executes the particular layer of the neural network based on whether the particular layer is a compute-intensive layer or a memory-intensive layer.

In Example 6, the subject matter of any one or more of Examples 1-5 optionally include wherein the profile is generated by a compiler, and wherein an amount of compute bandwidth and an amount of memory bandwidth is determined when the neural network is compiled.

In Example 7, the subject matter of any one or more of Examples 1-6 optionally include wherein the profile includes a layer-by-layer analysis of the neural network, the layer-by-layer analysis including one or more statistics for one or more respective layers of the plurality of layers of the neural network.

In Example 8, the subject matter of Example 7 optionally includes wherein the one or more statistics include an amount of hardware efficiency at the one or more respective layers of the neural network, an amount of hardware utilization at the one or more respective layers of the neural network, a number of compute cycles required to execute the one or more respective layers of the neural network, a number of data cycles required to read or write weights or activations from a memory cache at the one or more respective layers of the neural network.

In Example 9, the subject matter of Example 8 optionally includes wherein to determine whether a particular layer of the plurality of layers is compute-intensive or memory-intensive includes determining whether the number of compute cycles required to execute the particular layer meets a criterion.

In Example 10, the subject matter of Example 9 optionally includes wherein the criterion is based on at least one of a number of data cycles or a number of cached cycles.

Example 11 is a method for dynamic power management of a neural network, the method comprising: receiving a profile of the neural network, the profile including information regarding a plurality of layers of the neural network; and responsive to the profile and the information regarding the plurality of layers, adjusting a power level to an accelerator included on a visual processing unit (VPU) being configured to load and execute the neural network as the accelerator executes the neural network.

In Example 12, the subject matter of Example 11 optionally includes determining, using the profile, whether a particular layer of the plurality of layers is a compute-intensive layer or a memory-intensive layer, wherein to adjust the power level to the accelerator includes adjusting at least one of a voltage level or a frequency of a signal to the accelerator while the accelerator executes the particular layer of the neural network based on whether the particular layer is a compute-intensive layer or a memory-intensive layer.

In Example 13, the subject matter of Example 12 optionally includes wherein to determine whether a particular layer of the plurality of layers is compute-intensive or memory-intensive includes determining whether a number of compute cycles required to execute the particular layer meets a criterion, and wherein the criterion is based on at least one of a maximum number of data cycles or cached cycles.

In Example 14, the subject matter of any one or more of Examples 11-13 optionally include wherein the profile is generated by a compiler, and wherein an amount of compute bandwidth and an amount of memory bandwidth is determined when the neural network is compiled.

In Example 15, the subject matter of any one or more of Examples 11-14 optionally include wherein the profile includes a layer-by-layer analysis of the neural network, the layer-by-layer analysis including one or more metrics for one or more respective layers of the plurality of layers of the neural network.

In Example 16, the subject matter of Example 15 optionally includes wherein the one or more metrics include an amount of hardware efficiency at the one or more respective layers of the neural network, an amount of hardware utilization at the one or more respective layers of the neural network, a number of compute cycles required to the one or more respective layers of the neural network, a number of data cycles required to read or write weights or activations from a memory cache at the one or more respective layers of the neural network.

Example 17 is at least one non-transitory machine-readable medium including instructions stored thereon that, when executed by circuitry, cause the circuitry to: receive a profile of a neural network, the profile including information regarding a plurality of layers of the neural network; and responsive to the profile and the information regarding the plurality of layers, adjust a power level to an accelerator coupled to the circuitry while the accelerator executes the neural network.

In Example 18, the subject matter of Example 17 optionally includes wherein the instructions cause the circuitry to: determine, using the profile, whether a particular layer of the plurality of layers is a compute-intensive layer or a memory-intensive layer, wherein to adjust the power level to the accelerator includes adjusting at least one of a voltage level or a frequency of a signal to the accelerator while the accelerator executes the particular layer of the neural network based on whether the particular layer is a compute-intensive layer or a memory-intensive layer, and wherein to determine whether a particular layer of the plurality of layers is compute-intensive or memory-intensive includes determining whether a number of compute cycles required to execute the particular layer meets a criterion, and wherein the criterion is based on at least one of a maximum number of data cycles or cached cycles.

In Example 19, the subject matter of any one or more of Examples 17-18 optionally include wherein the profile is generated by a compiler, and wherein an amount of compute bandwidth and an amount of memory bandwidth is determined when the neural network is compiled, and wherein the profile includes a layer-by-layer analysis of the neural network, the layer-by-layer analysis including one or more statistics for one or more respective layers of the plurality of layers of the neural network.

In Example 20, the subject matter of Example 19 optionally includes wherein the one or more statistics include an amount of hardware efficiency at the one or more respective layers of the neural network, an amount of hardware utilization at the one or more respective layers of the neural network, a number of compute cycles required to execute the one or more respective layers of the neural network, a number of data cycles required to read or write weights or activations from a memory cache at the one or more respective layers of the neural network.

Example 21 is a non-transitory computer-readable medium with instructions stored thereon that configures operations of a compiler, the operations to: receive data corresponding to a plurality of layers of a neural network; compile respective layers of the plurality of layers into an executable form of the neural network; determine, during the compiling, whether one or more of the respective layers is a compute-intensive layer or a memory-intensive layer; and generate a profile of the compiled one or more respective layers.

In Example 22, the subject matter of Example 21 optionally includes the operations further to: transmit the profile to a device configured to execute the neural network.

In Example 23, the subject matter of any one or more of Examples 21-22 optionally include wherein the profile includes a layer-by-layer analysis of the neural network, the layer-by-layer analysis including one or more statistics for the one or more respective layers.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

**Claims**

1. An apparatus comprising:

   an accelerator, wherein the accelerator is configurable to load and execute a neural network; and
   circuitry configured to:

      receive a profile of the neural network, the profile including information regarding a plurality of layers of the neural network; and

responsive to the profile and the information regarding the plurality of layers, adjust a power level to the accelerator while the accelerator executes the neural network.

2. The apparatus of claim 1, wherein the circuitry is further configured to:
   determine, using the profile, whether a particular layer of the plurality of layers is a compute-intensive layer or a memory-intensive layer.

3. The apparatus of claim 2, further comprising:
   a local power management unit (PMU) configured to adjust the power level to the accelerator, and wherein the circuitry causes the PMU to adjust the power level.

4. The apparatus of claim 3, wherein the accelerator and the circuitry are implemented by a visual processing unit (VPU), wherein the PMU is located on the VPU, and wherein the neural network is adapted for processing of image or video data.

5. The apparatus of claim 4, wherein to adjust the power level to the accelerator includes adjusting at least one of a voltage level or a frequency of a signal to the accelerator while the accelerator executes the particular layer of the neural network based on whether the particular layer is a compute-intensive layer or a memory-intensive layer.

6. The apparatus of any of claims 1-5, wherein the profile is generated by a compiler, and wherein an amount of compute bandwidth and an amount of memory bandwidth is determined when the neural network is compiled.

7. The apparatus of any of claims 1-6, wherein the profile includes a layer-by-layer analysis of the neural network, the layer-by-layer analysis including one or more statistics for one or more respective layers of the plurality of layers of the neural network.

8. The apparatus of claim 7, wherein the one or more statistics include an amount of hardware efficiency at the one or more respective layers of the neural network, an amount of hardware utilization at the one or more respective layers of the neural network, a number of compute cycles required to execute the one or more respective layers of the neural network, a number of data cycles required to read or write weights or activations from a memory cache at the one or more respective layers of the neural network.

9. The apparatus of claim 8, wherein to determine whether a particular layer of the plurality of layers is compute-intensive or memory-intensive includes determining whether the number of compute cycles required to execute the particular layer meets a criterion.

10. The apparatus of claim 9, wherein the criterion is based on at least one of a number of data cycles or a number of cached cycles.

11. A method for dynamic power management of a neural network, the method comprising:

    receiving a profile of the neural network, the profile including information regarding a plurality of layers of the neural network; and
    responsive to the profile and the information regarding the plurality of layers, adjusting a power level to an accelerator included on a visual processing unit (VPU) being configured to load and execute the neural network as the accelerator executes the neural network.

12. The method of claim 11, further comprising:
    determining, using the profile, whether a particular layer of the plurality of layers is a compute-intensive layer or a memory-intensive layer, wherein to adjust the power level to the accelerator includes adjusting at least one of a voltage level or a frequency of a signal to the accelerator while the accelerator executes the particular layer of the neural network based on whether the particular layer is a compute-intensive layer or a memory-intensive layer.

13. The method of claim 12, wherein to determine whether a particular layer of the plurality of layers is compute-intensive or memory-intensive includes determining whether a number of compute cycles required to execute the particular layer meets a criterion, and wherein the criterion is based on at least one of a maximum number of data cycles or cached cycles.

**14.** The method of any of claims 11-13, wherein the profile is generated by a compiler, and wherein an amount of compute bandwidth and an amount of memory bandwidth is determined when the neural network is compiled.

**15.** A computer-readable medium with instructions stored thereon that, when executed by a processor of a computing device, cause the processor to perform the method of any of claims 11-14.

FIG. 1

EP 4 446 850 A1

FIG. 2

EP 4 446 850 A1

300 — COMPILE THE LAYERS OF THE NEURAL NETWORK

302 — LAYER-BY-LAYER ANALSYS

304 — DETERMINE COMPUTE INTENSIVE AND MEMORY INTENSIVE LAYERS

306 — DETERMINE OPTIMAL COMPUTE AND MEMORY POWER FOR EACH LAYER TO SEND TO THE VPU

308 — EXECUTE THE NEURAL NETWORK AND DYNAMICALLY ADJUSTING THE POWER TO EACH LAYER

# FIG. 3

400

```
┌─────────────────────────────────────────┐
│     RECEIVE A PROFILE OF THE NEURAL      │
│     NETWORK, THE PROFILE INCLUDING       │
│     INFORMATION REGARDING A              │
│     PLURALITY OF LAYERS OF THE NEURAL    │
│     NETWORK                              │
└─────────────────────────────────────────┘
```

402 — RECEIVE A PROFILE OF THE NEURAL NETWORK, THE PROFILE INCLUDING INFORMATION REGARDING A PLURALITY OF LAYERS OF THE NEURAL NETWORK

404 — DETERMINE, USING THE PROFILE, WHETHER A PARTICULAR LAYER OF THE PLURALITY OF LAYERS IS A COMPUTE-INTENSIVE LAYER OR A MEMORY-INTENSIVE LAYER

406 — ADJUST A POWER LEVEL TO AN ACCELERATOR INCLUDED ON A VISUAL PROCESSING UNIT (VPU) BEING CONFIGURED TO LOAD AND EXECUTE THE NEURAL NETWORK AS THE ACCELERATOR EXECUTES THE NEURAL NETWORK

# FIG. 4

500

502

530

510

PROCESSOR

524

DISPLAY DEVICE

INSTRUCTIONS

512

504

MAIN MEMORY

INPUT DEVICE

524

INSTRUCTIONS

514

506

STATIC MEMORY

UI NAVIGATION DEVICE

524

INSTRUCTIONS

516

508

MASS STORAGE

524

INSTRUCTIONS

SENSOR(S)

522

520

INTERLINK

518

NETWORK INTERFACE
DEVICE

SIGNAL GENERATION
DEVICE

526

528

NETWORK

OUTPUT CONTROLLER

# FIG. 5

Europäisches
Patentamt

European
Patent Office

Office européen
des brevets

# EUROPEAN SEARCH REPORT

Application Number

EP 23 21 0909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/246759 A1 (HUAWEI TECH CO LTD [CN]) 1 December 2022 (2022-12-01) * the whole document * & EP 4 328 712 A1 (HUAWEI TECH CO LTD [CN]) 28 February 2024 (2024-02-28) * paragraphs [0001], [0009], [0038], [0042], [0118] – [0123], [0148] – [0149], [0156]; claims 1,4,11; figures 1,2,4,7,8,9,10 * | 1-15 | INV.<br>G06F1/3228<br>G06N3/063<br>G06N3/10<br>G06F1/324<br>G06F1/3296<br>G06F1/3234 |
| A | US 2023/107333 A1 (KWON HYUNG-DAL [KR] ET AL) 6 April 2023 (2023-04-06) * figures 2-4 * | 1-15 | |
| | | | TECHNICAL FIELDS SEARCHED (IPC) |
| | | | G06F<br>G06N |

The present search report has been drawn up for all claims

| Place of search | Date of completion of the search | Examiner |
|---|---|---|
| The Hague | 19 April 2024 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 0909

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2024

| Patent document cited in search report | | Publication date | Patent family member(s) | | Publication date |
|---|---|---|---|---|---|
| WO 2022246759 | A1 | 01-12-2022 | CN | 117377923 A | 09-01-2024 |
| | | | EP | 4328712 A1 | 28-02-2024 |
| | | | WO | 2022246759 A1 | 01-12-2022 |
| US 2023107333 | A1 | 06-04-2023 | CN | 115936080 A | 07-04-2023 |
| | | | EP | 4160354 A2 | 05-04-2023 |
| | | | US | 2023107333 A1 | 06-04-2023 |

EPO FORM P0459

For more details about this annex : see Official Journal of the European Patent Office, No. 12/82